# EUROPÄISCHE PATENTSCHRIFT

(11) **EP 3 056 455 B1**
(45) Veröffentlichungstag und Bekanntmachung des Hinweises auf die Patenterteilung: **28.11.2018**
(21) Anmeldenummer: 16155267.4
(22) Anmeldetag: 11.02.2016
(51) Int. Cl.: B65B 51/30, B65B 35/24, B65B 35/44, B65B 59/00, B65G 19/24, B65B 9/06

(54) **ZUFUHRKETTEN-EINHEIT**
SUPPLY CHAIN UNIT
UNITE DE CHAINES D'APPROVISIONNEMENT

(30) Priorität: 11.02.2015 DE 202015100657 U
(43) Veröffentlichungstag der Anmeldung: 17.08.2016
(73) Patentinhaber: Gerhard Schubert GmbH, 74564 Crailsheim (DE)
(72) Erfinder: Haaf, Walter, 74564 Crailsheim (DE)
(74) Vertreter: Weickmann & Weickmann PartmbB

(56) Entgegenhaltungen:
- EP-A1- 0 571 048
- EP-A1- 2 620 395
- WO-A2-2007/115252
- GB-A- 1 449 904
- US-A1- 2007 056 833
- US-A1- 2007 056 833
- US-B1- 6 471 041

## Beschreibung

### I. Anwendungsgebiet

Die Erfindung betrifft eine Zufuhrketten-Einheit, wie sie insbesondere in Schlauchbeutelmaschinen zur definierten Zufuhr der zu verpackenden Produkte eingesetzt wird.

Bei Schlauchbeutelmaschinen werden Schlauchbeutel aus einer laufenden, zunächst ebenen, Folienbahn geformt, indem die Längsränder der - meist horizontal oder leicht schräg nach unter laufenden - Folienbahn gegeneinander gebogen und in Längsrichtung durchgehend gegeneinander versiegelt werden.

Ins Innere des entstehenden Folienschlauches werden mit der gleichen Laufrichtung und meist auch der gleichen Laufgeschwindigkeit die Produkte von der Zufuhrketten-Einheit eingebracht, sodass sich die Produkte danach in den gewünschten Abständen innerhalb des Folienschlauches befinden, sodass nach dem Einbringen der Produkte der Folienschlauch durch Quersiegelnähte zwischen den Produkten in einzelne Schlauchbeutel unterteilt werden kann.

### II. Technischer Hintergrund

Bei der Zufuhrketten-Einheit liegen die Produkte auf einer Auflagefläche auf und werden meist durch die in regelmäßigen Abständen an der Zufuhrkette befestigten Mitnehmer entlang der Auflagefläche vorwärts geschoben. Bei einer Schlauchbeutelmaschine muss die Zufuhrkette vor dem Punkt des Gegeneinander-Führens der Längsränder der Folienbahn aus dem inneren Querschnitt des entstehenden Folienschlauches herausgeführt werden, meist indem die Zufuhrkette nach unten abtaucht, wobei stromabwärts der Zufuhrketten-Einheit oft wenig Freiraum vorhanden ist.

Statt einer Zufuhrkette können jedoch auch andere Zufuhr-Förderer benutzt werden, weshalb für die Zwecke der vorliegenden Erfindung der eingeführte Begriff Zufuhrkette benutzt wird, dies jedoch jede Art von Zufuhr-Förderer sein kann, der geeignet ist, die Produkte in der notwendigen definierten Art und Weise in den entstehenden Folienschlauch hineinzuliefern, sei es ein Förderband, auf dessen ebener Oberseite die Produkte ohne Formschluss für den Weitertransport lediglich aufliegen, seien es Zahnriemen oder Gliederketten oder Ähnliches.

Bei der Zufuhrketten-Einheit muss relativ oft ein sog. Formatwechsel durchgeführt werden, also die Umstellung von einem bisherigen auf ein neues abzupackendes Produkt, welches sich natürlich hinsichtlich Form, Gewicht, Größe und ggf. weiteren Parametern des Produktes in der Regel unterscheidet.

Denn dann müssen die Zufuhrketten umgerüstet werden, indem beispielsweise der Abstand der Mitnehmer in Längsrichtung entlang der Zufuhrkette verändert wird, ggf. die Mitnehmer auch körperlich anders gestaltet sein müssen in Anpassung an die Form des Produktes, und unter Umständen auch die Seitenführungen, die verhindern, dass das Produkt seitlich von der Zufuhrkette herunterläuft, in ihrem Abstand gegeneinander neu eingestellt werden.

Bei den meisten Anwendungen ist hierfür der Ausbau der Zufuhrkette notwendig, was einen erheblichen Aufwand und eine lange Stillstandszeit der entsprechenden Maschine zur Folge hat.

In diesem Zusammenhang ist aus der GB 1 449 904 - die den nächstreichenden Stand der Technik bildet - eine Zufuhrkette für Produkte zu beispielsweise einer Schlauchbeutelmaschine bekannt, bei der die Mitnehmer zwischen zwei in parallelen, senkrechten Ebenen umlaufenden Transportketten geführt sind und beidseits mit je einer der beiden Transportketten fest verbunden sind.

Weiterhin ist aus der internationalen Patentanmeldung WO 2007/115252 A2 eine Mitnehmerketten-Einheit bekannt, bei der Mitnehmer über den Umlauf der Mitnehmerkette mitgenommen werden, indem sie im Umlaufbereich des Umlenkritzels formschlüssig mit dem Umlenkritzel in Eingriff stehen und entlang der geraden Kettenabschnitte zwischen den Umlenkritzeln formschlüssig mit der Transportkette, und somit nicht durchgängig an der Kette, befestigt sind.

Weiterhin ist aus der US 2007/0056833 A1 eine Zufuhrketten-Einheit bekannt, an denen Mitnehmer befestigt sind, die jeweils zweiteilig, nämlich aus Basisteil und Mitnehmerteil bestehend, ausgebildet sind, sodass das Mitnehmerteil von dem Basisteil gelöst und gegen ein produkt-spezifisch anderes Mitnehmerteil ausgetauscht werden kann.

Allerdings sind die Basisteile nicht an der (durchgehenden) Förderkette befestigt, sondern Bestandteil der Förderkette, indem sie jeweils ein Glied der Förderkette bilden. Damit können die Basisteile nicht von der Förderkette gelöst und dementsprechend auch nicht in ihrer Position an der Förderkette verändert werden.

### III. Darstellung der Erfindung

### a) Technische Aufgabe

Es ist daher die Aufgabe gemäß der Erfindung, eine Zufuhrketten-Einheit zu schaffen, bei der mit geringem baulichen Aufwand immer die zuverlässige, korrekte Füllung der Zufuhrkette gewährleistet ist, ein Formatwechsel in sehr kurzer Zeit durchgeführt werden kann und die Zufuhrketten-Einheit stromabwärts möglichst wenig Freiraum beansprucht.

### b) Lösung der Aufgabe

Diese Aufgabe wird durch die Merkmale des Anspruchs 1 gelöst. Vorteilhafte Ausführungsformen ergeben sich aus den Unteransprüchen.

Um einen Formatwechsel an einer solchen Zufuhrketten-Einheit in möglichst kurzer Zeit durchzuführen, ist es bereits bekannt, die an der Zufuhrkette befestigten Mitnehmer oder die Nester für Produkte auswechselbar an der Zufuhrkette zu befestigen, um abhängig von Art und Größe des Produktes die Mitnehmer oder Nester in einem größeren oder kleineren Abstand auf der Zufuhrkette anzuordnen oder auch einfach anders geformte, an das neue Produkt angepasste, Mitnehmer oder Nester auf der Zufuhrkette zu befestigen.

In der Regel läuft ja die Zufuhrkette endlos in einer vertikalen Umlaufebene um, wobei die Mitnehmer in dieser Umlaufebene radial nach außen abstehen.

Vom Obertrum einer solchen, über zwei horizontal beabstandete Umlaufrollen umlaufenden, Zufuhrkette ragen die Mitnehmer also nach oben ab. In Laufrichtung links und rechts dieser nach oben ragenden Mitnehmer verläuft in geringem Abstand jeweils ein Auflage-Teil einer Auflagefläche für die Produkte, wobei der ebenfalls in Laufrichtung verlaufende Schlitz zwischen den beiden Auflage-Teilen so gering wie möglich gewählt wird, also gerade groß genug, um die nach oben aufragenden Mitnehmer von der unter der Auflagefläche umlaufenden Zufuhrkette aus in den Bereich nach oberhalb der Auflagefläche aufragen zu lassen, und dort die Produkte vorwärts zu schieben.

Für die Formatumstellung muss also entweder der gesamte Mitnehmer leicht demontierbar und montierbar an der Zufuhrkette sein, oder der Mitnehmer besteht aus einem Basisteil, welches fest verbunden immer an der Zufuhrkette verbleibt und einem demgegenüber leicht montierbaren und demontierbaren Mitnehmer-Teil, welches an dem Basisteil zum Beispiel eingesteckt und verrastet oder auf andere Art und Weise sehr einfach gewechselt werden kann.

Das Basisteil steht in diesem Fall in der Regel nicht über die Oberkante der Auflagefläche für die Produkte vor.

Bei bisherigen Lösungen musste zum Wechseln der Mitnehmer die Zufuhrkette entweder komplett aus der Schlauchbeutel-Maschine ausgebaut und dann die Mitnehmer gewechselt werden oder es mussten zumindest andere Teile der Schlauchbeutel-Maschine, wie Abdeckungen, Gehäuseteile u.ä. demontiert werden, um die Mitnehmer an der dann besser zugänglichen Zufuhrkette wechseln zu können.

Erfindungsgemäß sind die Mitnehmer und insbesondere deren Befestigung gegenüber der Zufuhrkette so ausgebildet, dass entweder zum Lösen des gesamten Mitnehmers von der Zufuhrkette oder wenigstens eines Teiles, insbesondere des Mitnehmerteils vom Basis-Teil des Mitnehmers, keinerlei Demontagearbeiten an der Schlauchbeutel-Maschine - außer den demontierten Mitnehmern - durchgeführt werden müssen. Vorzugsweise werden die Mitnehmer oder Teile des Mitnehmers in der Umlaufebene nach außen, beim Obertrum also nach oben, abgezogen und/oder auf gesteckt.

Wenn im Folgenden davon gesprochen wird, dass zwei Teile aneinander entweder leicht lösbar oder nicht lösbar befestigt sind, so ist dies so zu verstehen, dass
- "nicht lösbar" bedeuten soll, dass die beiden Teile entweder nur unter Zerstörung der Verbindung zwischen ihnen voneinander gelöst werden können oder mittels zeitaufwändiger Demontagearbeiten, die insbesondere mehr als 10 Sekunden benötigen, insbesondere unter Benutzung von Werkzeugen und
- "leicht lösbar" bedeuten soll, dass die beiden Teile mit sehr geringem Zeitaufwand, die insbesondere weniger als **10** Sekunden benötigen, insbesondere ohne Benutzung eines Werkzeuges, voneinander ohne Zerstörung des Verbindungsmechanismus gelöst werden können, insbesondere durch ineinanderstecken oder ineinanderschieben und/oder Verrasten, und dadurch bereits die Verbindung hergestellt ist

In einer ersten Bauform der Mitnehmer bestehen diese aus Basisteil und daran leicht lösbar befestigtem Mitnehmerteil, wobei das Mitnehmerteil am Basisteil befestigt wird z.B. durch einfaches Einstecken und dabei Verrasten der beiden Teile gegeneinander, und umgekehrt durch einfaches Abziehen des Mitnehmerteils nach oben dieses demontiert werden kann.

Dabei besteht das Problem, dass die Mitnehmer am Ende der Förderstrecke der Zufuhrkette, also wenn der Mitnehmer um die vordere Umlenkrolle herum geführt wird, nicht radial von der Umlenkrolle abstehen soll, sondern der entlang der Förderstrecke immer im gleichen Aufrecht-Winkel zur Horizontalen nach oben aufragende Mitnehmer diesen Aufrecht-Winkel auch zu Beginn des Umlaufs um die stromabwärtige Umlenkrolle so lange beibehalten soll, bis die Oberkante des Mitnehmers unter die Oberkante der Auflagefläche der Zufuhrkette oder eine stromabwärtige nachgeordnete, weitere Auflagefläche, auf die die Produkte von der Zufuhrkette aufgeschoben werden, abgetaucht ist.

Zu diesem Zweck müssen die Mitnehmer vorzugsweise gelenkig um eine in Querrichtung verlaufende Schwenkachse innerhalb des Mitnehmers oder gegenüber der Zufuhrkette gestaltet sein und mit einer entsprechenden Kulissenführung im Bereich des beginnenden Herumführens um die Umlenkrolle geführt sein.

Beispielsweise kann der der Zufuhrkette zugewandte Teil des einstückigen Mitnehmers oder das Basisteil eines zweiteiligen Mitnehmers einen in Laufrichtung der Zufuhrkette sich erstreckenden Führungs-Schenkel aufweisen - beispielsweise neben der eigentlichen Zufuhrkette - der am Ende der Transportstrecke formschlüssig mit einer darunter angeordneten Führungs-Schiene zusammenwirkt, indem die Führungs-Schiene den Führungs-Schenkel beim Erreichen und Umlaufen des Mitnehmers um die stromabwärtige Umlenkrolle solange aufrecht hält, bis der Mitnehmer außer Kontakt mit dem von ihm entlang der Auflagefläche vorwärts geschobenen Produkt gerät.

Bei einer zweiten Bauform, ist der - dann vorzugsweise auch einstückige - Mitnehmer im Ganzen leicht lösbar an der Zufuhrkette befestigt, wobei in der Regel eine gelenkige Befestigung zwischen Zufuhrkette und Mitnehmer nicht möglich.

Der Mitnehmer kann dann ersatzweise aus gelenkig, aber nicht lösbar, miteinander verbundenem Basisteil und darauf befestigtem Mitnehmerteil bestehen, die für den Formatwechsel nicht voneinander getrennt werden, sondern in der Regel nur unter Zerstörung voneinander getrennt werden können. Dabei wird das Basisteil allerdings nicht gelenkig an der Zufuhrkette befestigt, sondern das Mitnehmerteil ist um die Querachse zum Basisteil beweglich, um in der zuvor beschriebenen Weise seinen Aufrecht-Winkel auch im Bereich des ersten Teils des Umlaufes um die stromabwärtige Umlenkrolle beizubehalten.

In diesem Fall müssen die zuvor zwischen dem Mitnehmer und einer entsprechenden feststehenden Führungsschiene beschriebenen Ausgestaltungen zwischen dem Mitnehmer-Teil und einer entsprechenden feststehenden Führungsschiene vorhanden sein.

Auch bei der zuvor beschriebene Lösung eines von einem Basisteil leicht demontierbaren Mitnehmerteils kann entweder die Verbindung zwischen diesen beiden Teilen eine solche quer verlaufende Schwenkachse aufweisen oder innerhalb des demontierbaren Mitnehmerteiles, in dem dieses selbst wieder aus zwei gelenkig miteinander verbundenen Einzelteilen besteht, die zueinander um die besagte Querachse verschwenkbar sind, in der Regel jedoch nicht ohne Zerstörung demontierbar sind.

Wenn bei zweiteiligen Mitnehmern das Basisteil immer an der Zufuhrkette verbleibt, können die Abstände zwischen den Mitnehmern nur dadurch verändert werden, indem das Mitnehmerteil entweder auf jedem oder nur jedem zweiten oder nur jedem dritten Basisteil aufgesetzt wird, sodass die mögliche entstehende Größe der Gefache immer ein ganzzahliges Vielfaches - hinsichtlich der Länge in Durchlaufrichtung - des kürzesten möglichen Gefaches sein kann.

Will man sehr variabel sein, müssten hier also sehr viele Basisteile in sehr geringem Abstand an der Zufuhrkette befestigt werden.

Wenn dagegen zum Wechseln des Formates immer der gesamte Mitnehmer von der Zufuhrkette entfernt wird, müssen lediglich in Längsrichtung eng beabstandete Befestigungsvorrichtungen an der Zufuhrkette hierfür vorhanden sein.

Eine Möglichkeit der Zufuhrkette hierfür - statt zum Beispiel eines Zahnriemens oder glatten Riemens - ist eine aus gelenkig um Querachsen miteinander verbundenen Kettengliedern bestehende übliche Gliederkette als Zufuhrkette. Der übliche konstruktive Aufbau einer solchen mehrgliedrigen Kette mit insbesondere zwei Seitenwangen ermöglicht es, in jedes einzelne Kettenglied und die dabei sich immer im gleichen Abstand befindenden Ketten-Stege jeweils einen Mitnehmer einzustecken, was eine optimal geringe Teilung der Mitnehmer entlang der Gliederkette ergibt.

Eine solche Befestigung führt dann jedoch in der Regel nicht zu einer Schwenkbarkeit des Mitnehmers direkt gegenüber der Zufuhrkette, sondern diese Verschwenkbarkeit muss in einem im Mitnehmer selbst vorhandenen Gelenk realisiert sein.

Bei Zufuhrketten-Einheiten gibt es häufig das Problem, dass ein mit seiner Unterseite auf einer feststehenden Auflagefläche der Zufuhrketten-Einheit entlang geschobenes Produkt nicht akzeptabel ist, beispielsweise wenn es sich um Kekse handelt, die auf der Unterseite eine Beschichtung aus Schokolade besitzen, da sich diese auf der Auflagefläche ablagern und diese verschmutzen und zusätzlich die Produkte verunstalten würde.

In diesem Fall besteht eine Lösung darin, die Auflagefläche der Zufuhrketten-Einheit mit der Zufuhrkette in Laufrichtung mitlaufen zu lassen, indem die links und rechts der Mitnehmer vorhandenen Auflageflächen-Teile zum einen in Laufrichtung angetrieben sind und zum anderen in der Regel aus mehreren, in Laufrichtung aufeinander folgenden, Auflage-Abschnitten bestehen.

Dann erfolgt - da die Laufgeschwindigkeit der Auflagefläche derjenigen der Transportkette entspricht - keine Relativbewegung in Längsrichtung zwischen Produkt und Auflagefläche - und die beschriebenen Nachteile werden vermieden.

Um die Bewegung der mitlaufenden Auflageflächen-Teile mit der Zufuhrkette zu bewirken, können die Auflageflächen-Teile links und rechts von den Mitnehmern direkt an der Zufuhrkette befestigt werden und mittels dieser bewegt werden. Dies würde allerdings zum einen speziell bei einer Schlauchbeutel-Maschine das Wechseln der Mitnehmer an der Zufuhrkette zusätzlich behindern, vor allem aber muss ja am Ende der Förderstrecke die Zufuhrkette nach unten abtauchen, und zuvor noch das Produkt auf eine stromabwärts vorhandene, in der Regel stillstehende, Ablage-Fläche schieben.

Dadurch kann die von oben herangeführte Folienbahn mit ihren Seitenkanten um das auf dieser Ablage-Fläche liegende Produkt herum nach unten geführt und dort gegeneinander gelegt und mit einer Längssiegelnaht gegeneinander versiegelt werden.

Um hierfür möglichst weit stromaufwärts ausreichend Platz zu schaffen, werden die Auflageflächen-Teile, insbesondere die diese bildenden einzelnen Auflageabschnitte, erfindungsgemäß vorzugsweise mittels je einer ebenfalls endlos umlaufenden Auflage-Kette bewegt, an der die einzelnen Abschnitte befestigt sind und von denen sich je eine Auflage-Kette links und rechts der Zufuhrkette befindet.

Jedoch sind dabei die Umlaufebenen der beiden Auflageketten in Laufrichtung betrachtet im Winkel zur Umlaufebene der Zufuhrkette angeordnet, indem sich das Obertrum der Auflagekette näher an der Umlaufebene der Zufuhrkette befindet als das Untertrum.

Die Auflage-Abschnitte ragen dabei nicht im rechten Winkel von der Umlaufebene der Auflagekette ab, sondern in einem solchen Winkel, dass sie bei Bewegung entlang des Obertrums eine mit den Abschnitten der anderen Auflagekette fluchtende, in der Regel horizontale, Ebene bilden.

Der Vorteil dieser Anordnung besteht darin, dass die Auflageabschnitte beim Erreichen ihrer stromabwärtigen Umlenkrolle ihrer Auflagekette nicht nur nach unten abtauchen, sondern gleichzeitig auch mit ihrem freien Ende von der vertikalen Längsmittelebene der Zufuhrkette und insbesondere der gesamten Schlauchbeutelmaschine nach außen wegschwenken, und damit sehr früh sehr viel Raum für das nach unten und gegeneinander Führen der Längsseitenkanten der Folienbahn freigegeben wird.

### c) Ausführungsbeispiele

Ausführungsformen gemäß der Erfindung sind im Folgenden beispielhaft näher beschrieben. Es zeigen:
- Fig. **1**a,b,c:: die Zufuhrketten-Einheit in Seitenansicht, Aufsicht und Frontansicht,
- Fig. **2**a, b:: die Zufuhrkette der Zufuhrketten-Einheit in unterschiedlichen Vergrößerungen ausschnittweise in der Seitenansicht,

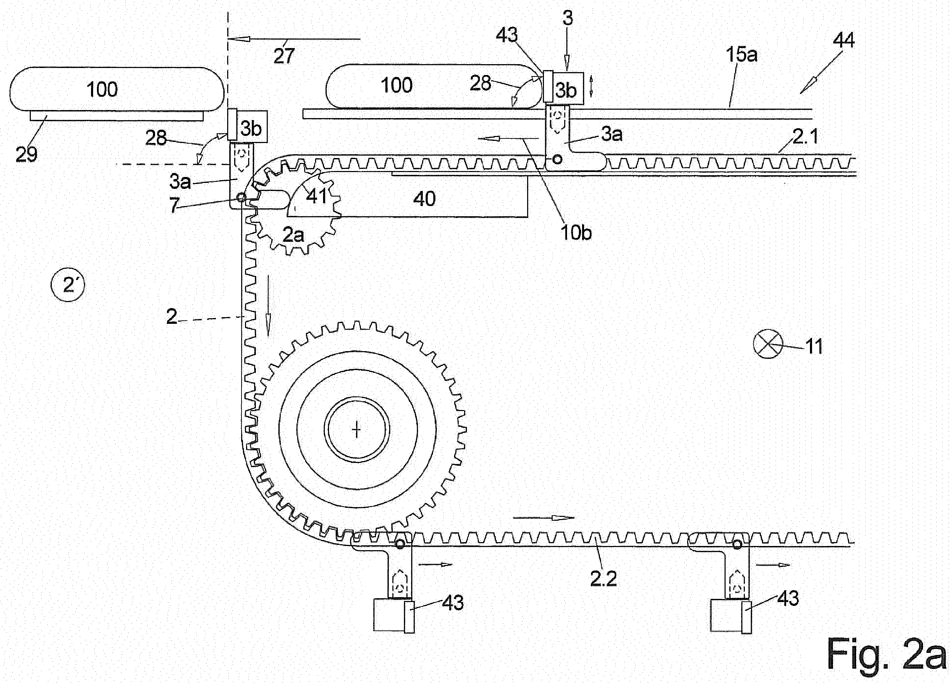

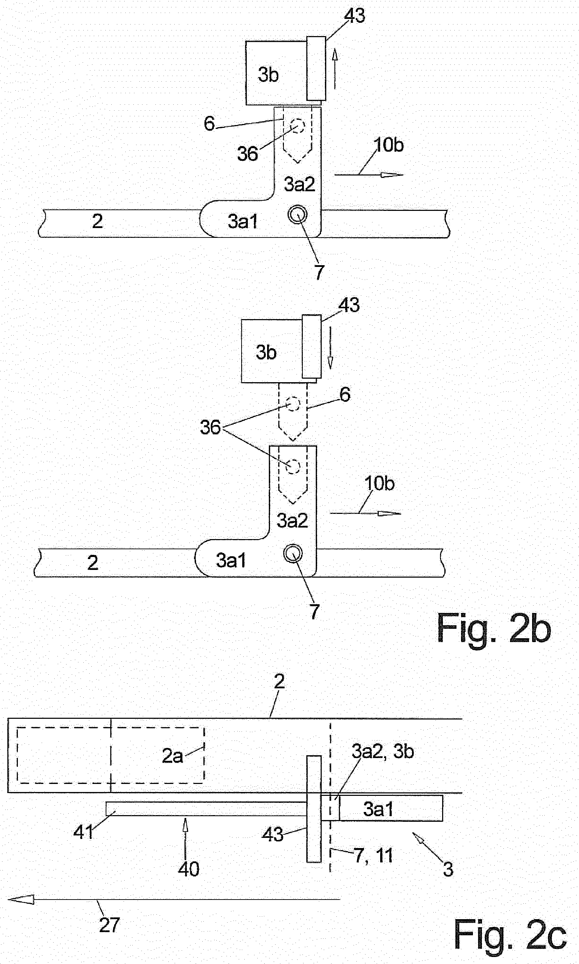

- Fig. **2**c:: die Führung der Mitnehmer in der Aufsicht,

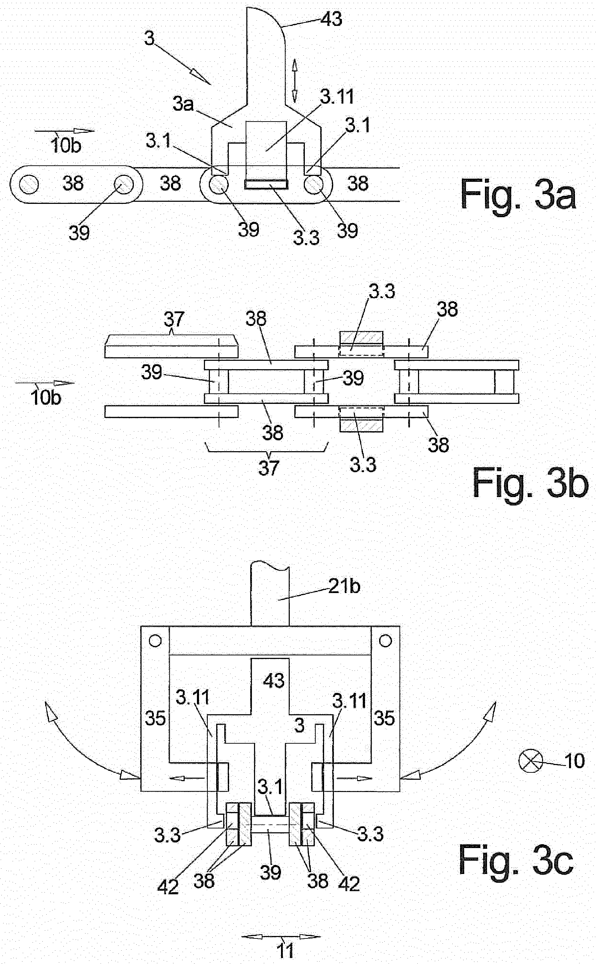

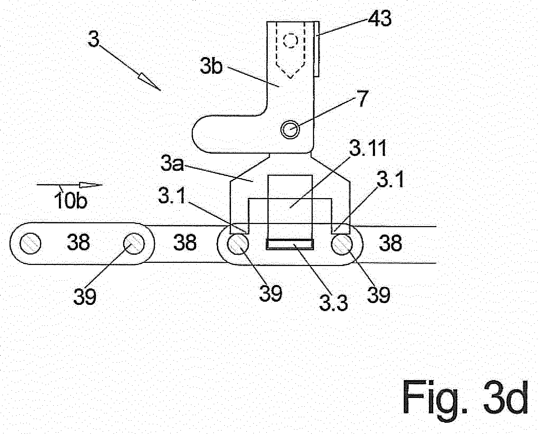

- Fig. **3**a - d:: eine zweite Bauform einer Zufuhrkette in Seitenansicht, Aufsicht und Frontansicht,

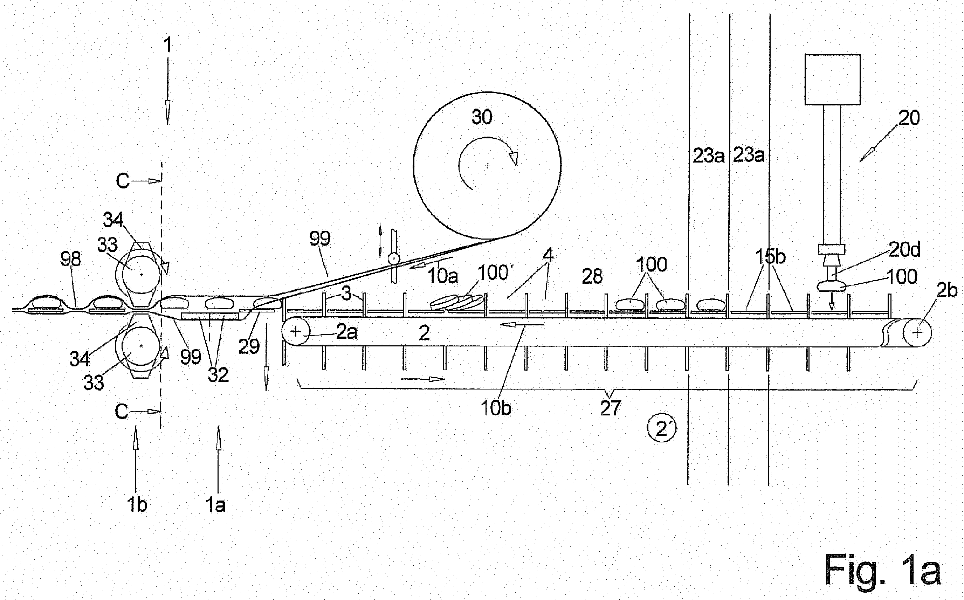

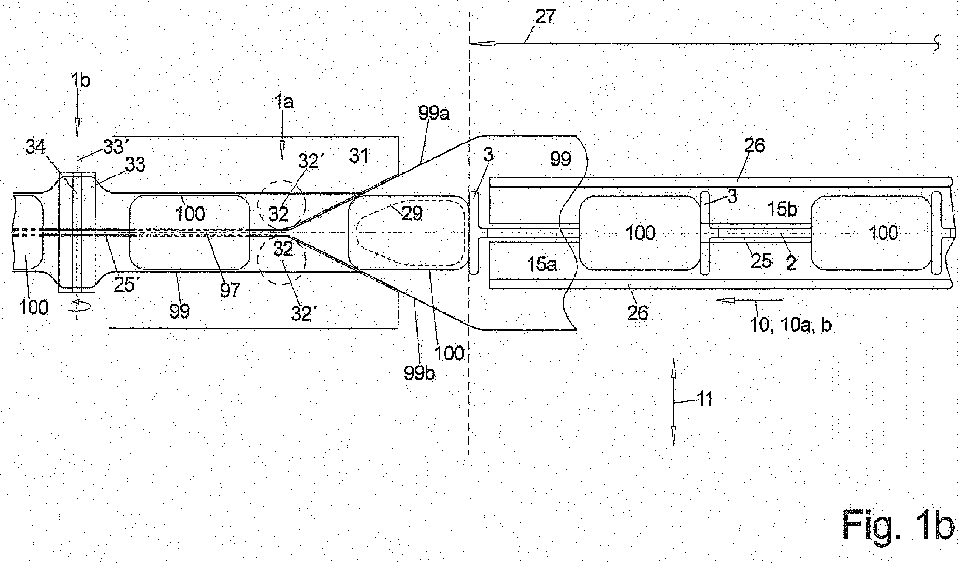

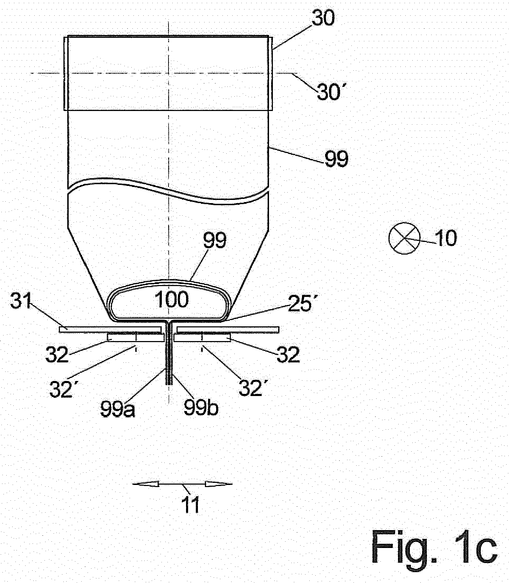

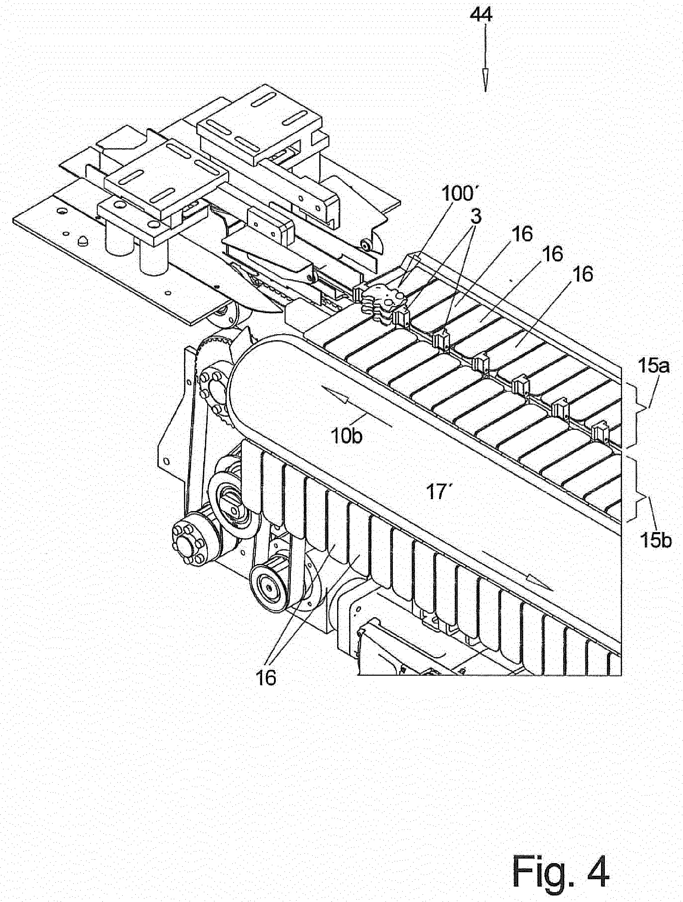

- Fig. **4**:: den Endbereich der Zufuhrketten-Einheit gemäß Figur 1 in perspektivischer Ansicht,

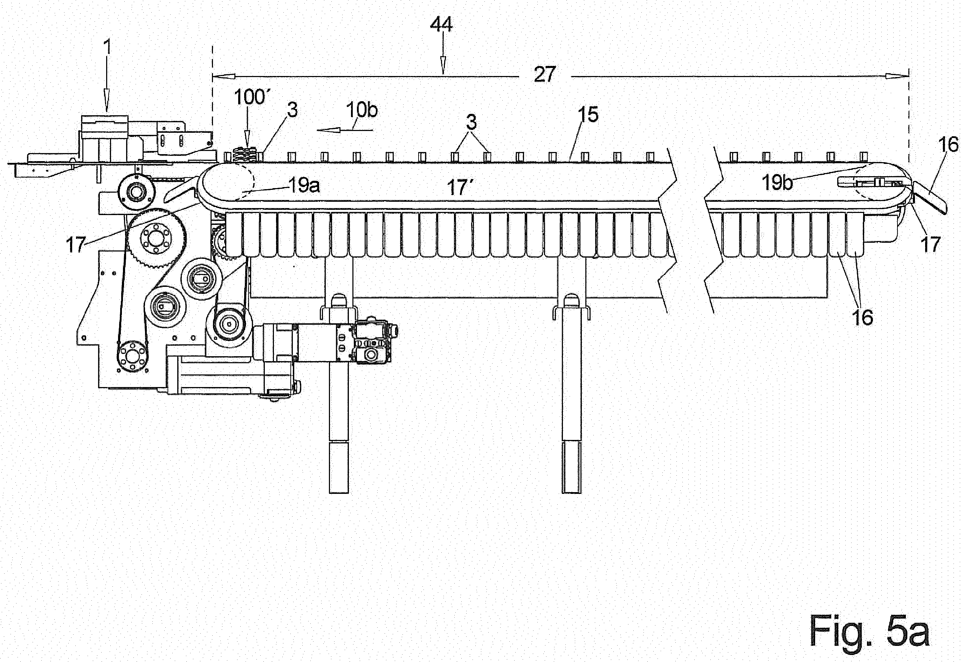

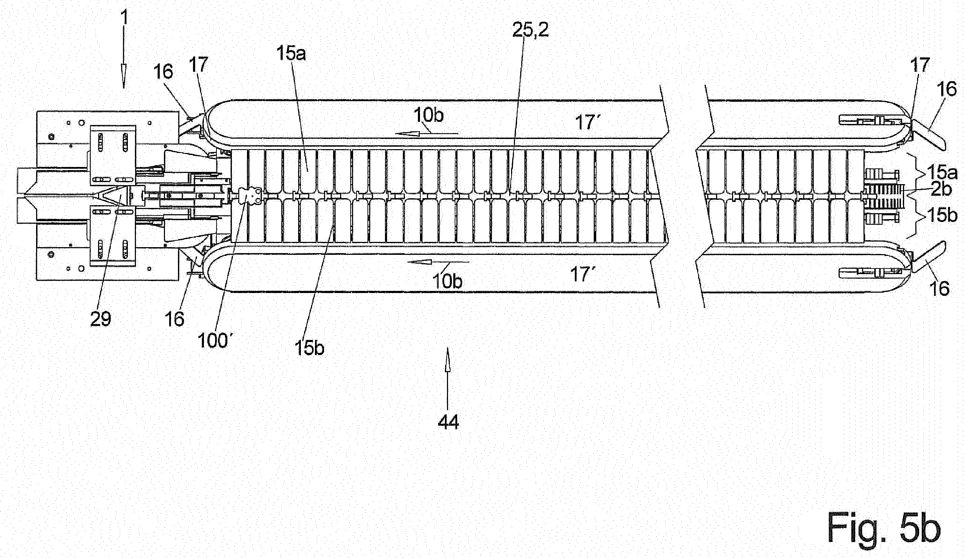

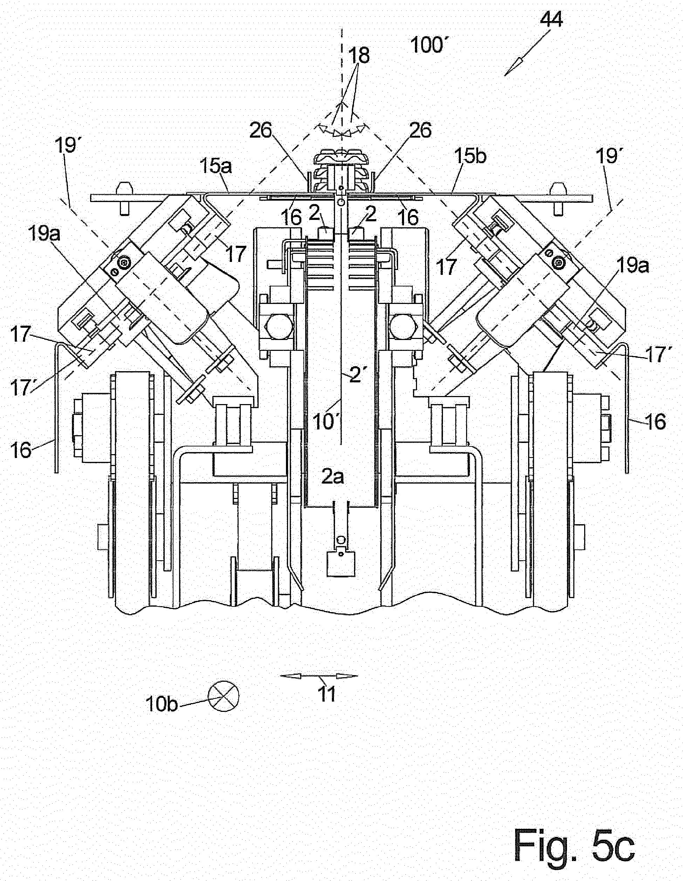

- Fig. **5**a, b, c:: die Förderstrecke der Zufuhrketten-Einheit mit Zufuhrkette und Auflagefläche gemäß Figur **1** in Seitenansicht, Aufsicht und Frontansicht.

In den **Figuren 1a****,** **b****,** **c** ist die Zufuhrketten-Einheit **44** mit einer nachfolgenden Schlauchbeutel-Baugruppe **1** dargestellt:
Die Zufuhrkette **2** läuft in einer vertikal stehenden Umlaufebene **2**' um, welche die Zeichenebene der **Figur 3a** ist, zwischen einer stromabwärtigen Umlenkrolle **2**a und einer stromaufwärtigen Umlenkrolle **2**b, von denen mindestens eine angetrieben ist um die Zufuhrkette in der gewünschten Weise in Bewegung zu setzen.

Betrachtet quer zu dieser Umlaufebene **2'** wie in **Figur 1a****,** stehen die Mitnehmer **3**, die an der Zufuhrkette **2** befestigt sind, von der endlos umlaufenden Zufuhrkette **2** nach außen ab, ragen also vom Obertrum der Zufuhrkette **2** aus nach oben und erstrecken sich durch einen Schlitz in der Auflagefläche für die Produkte **100** über diese Auflagefläche hinaus, um die darauf liegenden Produkte **100** oder Produktgruppen **100'** auf der Auflagefläche vorwärts zu schieben, die sich in Form von Auflage-Teilen **15**a, b gemäß der Aufsicht der **Figur 1b** beidseits des Schlitzes **25** für die Mitnehmer **3** verläuft, etwas oberhalb der Zufuhrkette **2.**

Oberhalb des Schlitzes **25** sind die Mitnehmer **3** in der Regel verbreitert und ragen seitlich über die Breite des Schlitzes **25** hinaus, um die Produkte zuverlässig vorwärts schieben zu können, wobei an den Auflageteilen **15**a, b ebenfalls in Längsrichtung **10** verlaufend Seitenführungen **26** angeordnet sind, deren gegenseitiger Abstand möglichst genau an die Breite der Produkte **100** angepasst ist, ebenso wie auch die Breite - in Querrichtung **11** gemessen - der Mitnehmer **3** an die Breite der Produkte **100** angepasst ist.

Im normalen Betrieb der z.B. Schlauchbeutelmaschine ist es von essentieller Bedeutung, dass in jedes der - zwischen den in Längsrichtung **10** beabstandeten Mitnehmern **3** gebildeten - Gefache **4** der Zufuhrkette **2** jeweils meist nur ein Produkt **100** eingelegt ist, sodass die Darstellung in **Figur 1a****,** dass in einem Gefach ein einzelnes Produkt **100,** im anderen dagegen eine Produktgruppe **100'** liegt, lediglich der Veranschaulichung dient aber nicht im realen Betrieb gemischt so auftreten wird.

Gegen Ende der Förderstrecke **27** der Zufuhrkette **2,** also der Strecke, über die sich die Mitnehmer **3** der Zufuhrkette **2** bewegen können, tauchen die Mitnehmer **3** durch das Herumführen um die stromabwärtige Umlenkrolle **2**a nach unten weg und verlieren dadurch den Kontakt zu dem vor ihm hergeschobenen Produkt **100.**

Wie **Figur 1a** zeigt - und später anhand der **Figuren 2a****,** **b** näher erläutert wird - soll der Mitnehmer **3** denselben Aufrechtwinkel **28,** den er während des Hauptteiles der Förderstrecke **23** zur horizontalen Ebene eingenommen hat, beim Abtauchen um die Umlenkrolle **2**a herum nach unten solange beibehalten, wie er noch in Kontakt mit dem Produkt **100** steht, also bis die Oberkante der Kontaktfläche **43** des Mitnehmers **3** unter das Niveau der Auflagefläche für die Produkte abgetaucht ist, um ein Beschädigen des Produktes dabei zu vermeiden.

Wie am besten **Figur 1b** in der Aufsicht zeigt, schiebt der nach unten abtauchende Mitnehmer **3** am Ende der Förderstrecke **27** der Zufuhrketten-Einheit **44** das Produkt **100** auf eine Ablagefläche **29,** die in der nachfolgenden Schlauchbeutel-Baugruppe feststehend montiert ist, und sich stromabwärts der Auflage-Teile **15**a, b befindet, vorzugsweise auf gleicher Höhe oder geringfügig niedriger.

Die Funktion der nachfolgend dargestellten Schlauchbeutel-Baugruppe **1** mit der Längs-Siegeleinheit **1**a und der Quer-Siegeleinheit **1**b ist für die vorliegende Erfindung nicht relevant.

Die **Figuren 2a****,** **b** und **3a-d** zeigen die Gestaltung und Funktion der Zufuhrkette **2,** an der die Mitnehmer **3** befestigt sind.

Die **Figur 2a** zeigt einen Teil der Zufuhrketten-Einheit **44,** nämlich das Ende der Förderstrecke **27** der endlos umlaufenden Zufuhrkette **2** mit Blick auf deren Umlaufebene **2'**.

Die Zufuhrkette **2** - mit diesem Begriff sollen alle geeigneten Förderelemente umfasst sein - ist in diesem Fall als Zahnriemen ausgebildet und das horizontal laufende Obertrum **2.1** wird am Ende der Förderstrecke **27** über eine erste Umlenkrolle **2**a in diesem Fall im rechten Winkel nach unten umgelenkt und über eine etwa darunter angeordnete weitere Umlenkrolle **2**b in zum wiederum horizontal zurücklaufenden Untertrum **2'.**

Die Mitnehmer **3** ragen in der Umlaufebene **2'** von der Zufuhrkette **2** nach außen ab, und entlang des Obertrums **2'** in diesem Fall senkrecht nach oben.

Sie erstrecken sich dabei durch einen am besten in **Figur** 1b sichtbaren Schlitz **25,** der in Längsrichtung **10**b verlaufend zwischen den seitlich davon angeordneten Auflageteilen **15**a, b gebildet wird, bis über die Oberseite der Auflageflächen **15**a, b hinaus und können dadurch die im Bereich darüber in Querrichtung **11** über den Schlitz **25** hinweg auf den Auflageteilen **15**a, b liegende Produkt vorwärts schieben, in diesem Fall nach links.

Wenn diese Mitnehmer **3** um die Umlenkrolle **2**a am Ende des Obertrums **2.1** in Laufrichtung **10**b herumgeführt werden, würden sie bei unbeweglicher Befestigung am Zahnriemen **2** mit ihrer in Laufrichtung nach vorn gerichteten Kontaktfläche **43** eine Schwenkbewegung um den Mittelpunkt der Umlenkrolle **2**a vollziehen, und damit die Kontaktfläche **43** in diesem Bereich zunehmend mit ihrer Oberkante gegen die Rückseite des Produktes **1** drücken, und an diesem entlang nach unten schaben, was die Produkte **100** beschädigen kann.

Um zu erreichen, dass die beim Umlaufen um diese Umlenkrolle **2**a nach unten abtauchenden Mitnehmer **3** bis zum Abtauchen unterhalb der Höhe der Auflage-Teile **15**a, b ihren Aufrechtwinkel **28** zwischen der Kontaktfläche **43** und der Horizontalen beibehalten, sind die Mitnehmer **3** zunächst einmal an der Zufuhrkette **2** gelenkig um eine in Querrichtung **11** verlaufende Schwenkachse **7** ausgebildet. Um Größe und Form der Kontaktfläche **43** je nach zu handhabendem Produkt **100** anpassen zu können, sind die Mitnehmer **3** zweiteilig ausgebildet mit einem Basisteil **3**a, welches über die Schwenkachse **7** an der Zufuhrkette **2** befestigt ist und das Mitnehmerteil **3**b, welches sich ganz oder überwiegend oberhalb der Auflageteile **15**a, b befindet und am Basisteil **3**a lösbar befestigt ist.

In diesem Fall ist das Mitnehmerteil **3**b von oben in die obere Stirnfläche des Basisteiles 3a einsteckbar und verrastbar - wie in **Figur 2b** auch in getrenntem Zustand dargestellt -, indem das Mitnehmerteil **3**b an seiner Unterseite einen Einsteckzapfen **6** aufweist, der in eine entsprechende Ausnehmung des Basisteiles **3**a passt, und zwischen beiden ist eine Rastvorrichtung **36** vorhanden, beispielsweise eine bekannte, mittels Federkraft vorgespannte Rastkugel, die wahlweise im Basisteil **3**a oder im Mitnehmerteil **3**b vorhanden sein kann und in eine entsprechende Rastvertiefung des anderen Teiles hinein mittels Federkraft vorgespannt ist und einrastet.

Das Basisteil **3**a ist in der Blickrichtung der **Figur 2a** **und** **2b****,** also in Seitenansicht auf die Umlaufebene **2'** der Zufuhrkette **2,** der Querrichtung **11,** L-förmig ausgebildet mit einem nach oben, also bzgl. der umlaufenden Zufuhrkette **2** nach außen, weisenden Einsteckschenkel **3**a**2**, in dem sich die Aufnahme- und Rastvorrichtung für das Mitnehmerteil befindet, und einen dazu - vorzugsweise an dessen unterem Ende - im Winkel sich etwa in Verlaufsrichtung der Zufuhrkette **2** entgegen deren Laufrichtung **10**b erstreckenden Führungsschenkel **3**a**1**.

Der Mitnehmer **3,** hier das Basisteil **3**a, kann in einer Aussparung der Zufuhrkette **2** angeordnet sein, ist jedoch vorzugsweise in der Aufsicht betrachtet seitlich an dieser befestigt, wie die Aufsicht der **Figur 2c** zeigt.

Gegen Ende der Förderstrecke **27** ist auf Höhe der Unterkante des Führungsschenkels **3**a**1** eine Kulissenführung **40** angeordnet, deren Oberseite und in Richtung Ende der Förderstrecke eine Stirnfläche in Form einer Führungskurve **41,** die von der Oberseite zum am vorderen Ende der Unterseite in Form eines Bogens konvex gekrümmt ist, so angeordnet, dass zu Beginn des Herumlaufens der Schwenkachse **7** eines Mitnehmers **3** um diese Umlenkrolle **2**a, zunächst die Unterkante und dann die hintere, vorzugsweise gerundete, freie Ende des Führungsschenkels **3**a**1** durch die Führungskurve **41** so geführt wird, dass der Mitnehmer **3** seine Winkelstellung bezüglich der Schwenkachse **7** beibehält - und damit der Aufrecht-Winkel **28** ebenfalls beibehalten wird - bis die Oberkante des Mitnehmers **3,** hier also des Mitnehmerteiles **3**b, unter das Niveau der Oberseite der Auflageteile **15**a, b abgetaucht ist und den Kontakt mit dem bisher vor sich her geschobenen Produkt **100** verliert.

Dadurch sind Beschädigungen an der Rückseite des Produktes **100** durch das Mitnehmerteil **3**b vermieden.

Wie **Figur 2a** auch zeigt, enden die Auflage-Teile **15**a, b noch vor Ende der Förderstrecke **27** in Transportrichtung **10**b, um den Mitnehmerteil **3**b des Mitnehmers **3,** welcher gemäß **Figur 5b** in aller Regel breiter ist als der Schlitz **25,** in dem der Mitnehmer **3** läuft, nach unten abtauchen kann.

Stromabwärts hinter dem Ende der Auflageteile **15**a, b befindet sich auf gleichem oder geringfügig niedrigerem Niveau die stillstehende Auflagefläche **29,** auf welche das Produkt **100** vom Mitnehmer **3** am Ende der Förderstrecke **27** aufgeschoben wird, bevor der Mitnehmer **3** den Kontakt zum Produkt **100** verliert, um von dort mit Hilfe der an ihm anliegenden, in **Figur 2a** nicht dargestellten, Folienbahn **99** weiter transportiert zu werden.

Die **Figuren 3a****-d** zeigen eine normale Gliederkette als Zufuhrkette **2** und eine andere Art der Befestigung von Mitnehmern **3** an einer solchen Gliederkette:
Eine solche Gliederkette besteht aus in Längsrichtung **10** beabstandeten, quer verlaufenden, zylindrischen Kettenstegen **39,** an deren linken und rechten Ende jeweils eine äußere und eine innere Kettenwange **38** angreifen, wobei die innere oder die äußere, meist die äußere, Kettenwange **38** verschwenkbar um die Querachse des Kettensteges **39** ist.

Jede Kettenwange **38** verbindet zwei solcher Kettenstege **39.**

An einer solchen Gliederkette können spezifisch gestaltete Mitnehmer **3** von oben aufgesteckt und verrastet werden wie am besten in **Figur 3a** ersichtlich:
Von dem Zentralkörper des Mitnehmers **3** ragen Anlagearme **3.1** nach unten, die in Längsrichtung **10** beabstandet sind, mit einem solchen Längs-Abstand, dass sie mit ihren freien stirnseitigen Anlageflächen gerade auf je einem von zwei benachbarten Kettenstegen **39** aufliegen können, ohne beim Herumlaufen der Kette um ein Zahnrad mit dem Zahnrad zu kollidieren.

Zwei mittlere, elastische Rastarme **3.11** ragen in der Mitte des Längs-Abstandes zwischen den Anlagearme **3.1** ebenfalls von dem Zentralkörper nach unten, in Querrichtung beabstandet etwa um die Breite eines Kettengliedes **37.** An ihrem unteren Ende weisen die Rastarme **3.11** jeweils eine nach innen gerichtete Quer-Rastnase **3.3** auf, die in Richtung der gegenüberliegen Quer-Rastnase **3.3** gerichtet ist und in eine in der vorzugsweise außen liegenden Kettenwange **38** ausgebildete Rastöffnung passt und auf Grund der elastischen Vorspannung der Rastarme **3.11** auch in diesen verrrastet, wobei sich dabei die Rastarme **3.11** seitlich außen entlang der äußeren Kettenwangen **38** nach unten erstrecken.

Die Anlageflächen der Anlagearme **3.1** sitzen in diesem verrasteten Zustand auf den zwei benachbarten Kettenstegen **39** auf.

Am oberen Ende dieses vorzugsweise einstückigen Mitnehmers **3** ist die in Laufrichtung **10**b weisende Kontaktfläche **43** nach hinten fliehend gekrümmt, um beim Abtauchen unter die Auflagefläche die Rückseite des Produktes nicht zu beschädigen.

In **Figur 3c** ist ferner dargestellt, wie ein mit solchen Rastarmen, in diesem Fall den elastischen Rastarmen **3.11,** ausgestatteter Mitnehmer **3** von einem Mitnehmer-Werkzeug **21**b, welches beispielsweise an einem Roboterarm an dessen Werkzeughand **20**d befestigt sein kann, nicht nur gehalten, sondern die Rastarme **3.11** auch soweit zusammen gegeneinander gedrückt werden können, dass der Mitnehmer **3** zwischen den Kettenwangen **38** von oben eingefahren und beim Loslassen des Gegeneinander-Drückens nach außen in die Rastöffnung **42** einrastet.

Zu diesem Zweck kann ein solches Mitnehmer-Werkzeug **21**b zwei beidseits des Mitnehmers nach unten ragende, mit dem gewinkeltem und mit dem freien Ende nach innen gegen die Rastarme **3.11** gerichteten Greifer **35** besitzen, um in Längsrichtung **10** verlaufende Gelenke gesteuert gegenüber dem Hauptteil des Mitnehmer-Werkzeuges **21**b verschwenkt werden können zum Ergreifen oder Loslassen des Mitnehmers **3** an den Rastarmen **3.11.**

Der Vorteil dieser Ausführungsform einer Zufuhrkette als Gliederkette und andererseits der dargestellten oder einer ähnlich wirkenden Form von Mitnehmern **3** besteht darin, dass Mitnehmer an jedem Kettenglied - sofern an jedem Kettenglied **37** die entsprechende Rastöffnung **42** vorhanden ist - eingesetzt werden kann, also ein sehr geringer Minimalabstand zwischen den Mitnehmern zur Verfügung steht, und größere Abstände immer ein ganzzahliges Mehrfaches davon sind.

Bei der Ausführungsform gemäß **Figur 2a****-c** sind dagegen die Basisteile **3**a meist in einem deutlich größeren Abstand an der Zufuhrkette **2,** insbesondere ausgeführt als Zahnriemen, vorhanden, um den Herstellungsaufwand über die jeweils notwendige gelenkige Verbindung um die Schwenkachsen **7** für einen solchen Zahnriemen gering zu halten, was bei einer Gliederkette - bis auf das Vorhandensein der Rastöffnungen **42** - keine weiteren Zusatzarbeiten erfordert.

Der Nachteil der in den **Figuren 3a** - **c** beschriebenen Lösung besteht jedoch darin, dass ein so aufgesteckter Mitnehmer **3** nicht um eine quer verlaufende Schwenkachse gegenüber der Gliederkette **37** verschwenkbar ist.

Um die Beibehaltung des Aufrechtwinkels **28** beim Abtauchen des Mitnehmers unter das vorwärts geschobene Produkt am Ende der Förderstrecke zu ermöglichen - falls dies aufgrund des Produktes notwendig ist - weist ein solcher Mitnehmer **3** in einer weiteren Ausführungsform - wie in **Figur 3d** dargestellt - wiederum ein Basisteil **3**a auf, das z.B. gemäß der **Figuren 3a** - direkt an einem Kettenglied **37** befestigt ist.

Daran ist - nach oben aufragend - ein Mitnehmer-Teil **3**b um eine quer verlaufende Schwenkachse **7** verschwenkbar befestigt, welches insbesondere gestaltet ist wie in Figur **4**b und in gleicher Weise mit einer Führungsschiene zusammenwirken kann, um die Beibehaltung des Aufrechtwinkels **28** beim Abtauchen des Mitnehmers **3** zu ermöglichen. Beim Wechseln des Mitnehmers wird dieser also hier im Ganzen von der Gliederkette demontiert.

Aussehen und Zusammenwirken des Mitnehmerteiles **3**b mit einer Kulissenführung **40** können dann genauso gelöst werden wie anhand der **Figuren 2a****,** **b, c** beschrieben.

Die **Figuren 4** **sowie 5a** - **c** zeigen in vergrößerter Darstellung die Zufuhrketten-Einheit **44** ganz oder über nur einen Teil ihrer Förderstrecke **27,** über welche Produkte, hier eine Produktgruppe **100',** in Richtung der Schlauchbeutel-Baugruppe **1** gefördert werden, wobei es sich um mitlaufende Auflage-Teile **15**a, b beidseits des Schlitzes **25,** durch den die Mitnehmer **3** von der Zufuhrkette **2** darunter in dem Bereich oberhalb der Auflage-Teile **15**a, b ragen, ausgebildet sind.

Dabei sind die Auflage-Teile **15**a, b in Laufrichtung **10** unterteilt in einzelne Auflage-Abschnitte **16,** die allesamt jeweils an einer endlos umlaufenden Auflagekette **17** befestigt sind, von denen eine links und eine rechts der Zufuhrkette **2** angeordnet ist, und die jeweils in einer Umlaufebene **17'** umlaufen, in den **Figuren 5a****, b** eingezeichnet an der Abdeckung, die die Umlaufkette **17** abdeckt.

Wie **Figur 5b** **und** **5c** für eine relativ kleine Produktgruppe **100'** erkennen lässt, liegt die Produktgruppe **100'** mit ihrer Rückseite an dem Mitnehmer **3** an, der sie vorwärts schiebt und liegt mit ihrer Unterseite beidseits auf den Auflageteilen **15**a, b, also jeweils einem oder mehreren aneinander anschließenden Auflage-Abschnitten **16,** wie in **Figur 5b** **und** **5c** erkennbar, auf.

Deshalb wird in aller Regel die Umlaufkette **17** mit der gleichen Geschwindigkeit in Laufrichtung **10**b bewegt wie die Zufuhrkette **2,** um Relativbewegungen zwischen der Unterseite des Produktes oder hier der Produktgruppe **100** und der Oberseite der Auflage-Teile **15**a,b, also der Auflageabschnitte **16,** zu vermeiden.

Das wesentliche der Ausbildung dieser Förderstrecke zeigt **Figur 5c** betrachtet in Längsrichtung **10**b: Daraus wird ersichtlich, dass die Umlaufebenen **17'** der beidseits der Zufuhrkette **2** angeordneten Umlaufketten **17** in einem spitzen Winkel zur Umlaufebene **2'** der Zufuhrkette **2,** symmetrisch zur Umlaufebene **2**' der Zufuhrkette **2,** die gleichzeitig die Längsmittelebene **10'** der gesamten Förderstrecke ist, angeordnet sind.

Damit die an diesen Zufuhrketten **17** angeordneten Auflageabschnitte **16,** wenn sie mit Hilfe des Obertrums der Zufuhrkette **17** synchron mit den Mitnehmern **3** bewegt werden, eine horizontale Auflagefläche, also Oberseite besitzen, ragen die Auflageabschnitte **16** von der Umlaufkette **17** und deren Umlaufebene **17'** in einem entsprechenden Winkel ab.

Der Zweck dieser Anordnung ist am besten in **Figur 5b** erkennbar:
Sobald die Abschnitte **16** am Ende der Förderstrecke **27** in den Bereich der dortigen Umlenkrolle **19**a gelangen, werden sie nicht nur radial nach außen geschwenkt, sondern gleichzeitig aufgrund der Schrägstellung der Umlaufebene **17'** auch nach unten bewegt, sodass auf dem Höhenniveau der Auflageteile **15**a, b am Ende der Förderstrecke **27** unmittelbar nachgeordnet Raum für den Beginn der Schlauchbeutel-Baugruppe **1** besteht.

Diese weist bei der in den **Figuren 4** **und** **5a****-c** dargestellten Bauform einen für die vorliegende Erfindung nicht relevanten Zwischenförderer auf, der zwischen dem Ende Förderstrecke **27** der Zufuhrkette **2** und der fest montierten Auflagefläche **29** für die Produkte angeordnet sein kann.

### BEZUGSZEICHENLISTE

- **1**: Schlauchbeutel-Baugruppe
- **1**a: Längssiegel-Einheit
- **1**b: Quersiegel-Einheit
- **2**: Zufuhrkette
- **2.1**: Obertrum
- **2.2**: Untertrum
- **2**a, b: Umlenkrolle
- **2'**: Umlaufebene
- **3**: Mitnehmer
- **3**a: Basisteil
- **3**b: Mitnehmerteil
- **3**a**1**: Führungsschenkel
- **3**a**2**: Einsteckschenkel
- **3.1**: Rastarm
- **3.2**: Längs-Rastnase
- **3.3**: Quer-Rastnase
- **4**: Gefach
- **5**: Produkt-Auflage
- **6**: Einsteckzapfen
- **7**: Schwenkachse
- **8**: Produktband
- **9**: Längsabstand
- **10**a, b: Längsrichtung, Durchlaufrichtung
- **10'**: Längsmittelebene
- **11**: Querrichtung
- **12**: vertikale Richtung

- **15**: Auflagefläche
- **15**a, b: Auflage-Teil
- **16**: Auflage-Abschnitt
- **17**: Auflage-Kette
- **17'**: Umlaufebene
- **18**: Winkel
- **19**a, b: Umlenkrolle
- **19'**: Umlenkachse
- **20**: Umsetz-Roboter, Picker

- **25**: Schlitz
- **26**: Seitenführung
- **27**: Förderstrecke
- **28**: Aufrecht-Winkel
- **29**: Ablagefläche
- **30**: Vorratsrolle
- **31**: Schlauchbeutelplatte
- **32**: Siegelrollen
- **32'**: Rotationsachse
- **33**: Quer-Siegelwalze
- **33'**: Rotationsachse
- **34**: Siegelvorsprung
- **35**: Greifer
- **36**: Rastvorrichtung, Rastkugel
- **37**: Kettenglied
- **38**: Kettenwange
- **39**: Kettensteg
- **40**: Kulissenführung
- **41**: Führungskurve
- **42**: Rastöffnung
- **43**: Kontaktfläche
- **44**: Zufuhrketten-Einheit
- **96**: Schlauchbeutel
- **97**: Längs-Siegelnaht
- **98**: Quer-Siegelnaht
- **99**: Folienbahn, Folienschlauch
- **99**a,b: Längs-Rand
- **100**: Produkt
- **100'**: Produkt-Gruppe

## Patentansprüche

1. Zufuhrketten-Einheit **(44)** mit
- einer sich in Längsrichtung **(10**b**)** erstreckenden Auflagefläche **(15)** für die zuzuführenden Produkte **(100),**
- einer in Längsrichtung **(10**b**)** laufenden, endlosen Zufuhrkette **(2)** mit daran in Längsabständen **(9)** beabstandeten Mitnehmern **(3)** zum vorwärts Bewegen der Produkte **(100)** über eine Förderstrecke **(27)** entlang der Auflagefläche **(15),**
- wobei die einteiligen oder mehrteiligen Mitnehmer **(3)** jeweils wenigstens teilweise leicht lösbar so gegenüber der Zufuhrkette **(2)** direkt oder indirekt befestigt sind, dass sie von der in einer Maschine montierten Zufuhrkette (2) von dieser ohne Demontieren der Auflagefläche **(15)** wenigstens jeweils zum Teil gelöst und auch an unterschiedlichen Längspositionen an der Zufuhrkette (2) befestigt werden können,
**dadurch gekennzeichnet, dass**
- eine feststehende Kulissenführung **(40)** für die Mitnehmer **(3)** vorhanden ist, sodass beim Abtauchen des entlang eines Obertrums **(2.1)** der Zufuhrkette **(2)** herangeführten Mitnehmers **(3)** im Wirkbereich einer stromabwärtigen Umlenkrolle **(2**a**)** die nach vorne gerichtete Kontaktfläche **(43)** des Mitnehmers **(3)** wenigstens über einen anfänglichen Teil des Umlaufes um diese Umlenkrolle **(2**a**)** seinen lotrecht zur Umlaufebene (**2**') betrachteten, bisherigen Aufrechtwinkel **(28)** gegenüber der Horizontalen beibehält.

2. Zufuhrketten-Einheit nach Anspruch 1,
**dadurch gekennzeichnet, dass**
- die Zufuhrkette **(2)** endlos in einer insbesondere vertikalen Umlaufebene (**2**'), die parallel zu der Längsrichtung **(10**b**)** liegt, und um wenigstens zwei Umlenkrollen **(2**a, b**)** umläuft und
- insbesondere die Mitnehmer **(3)** von der Zufuhrkette **(2)** in deren Umlaufebene **(2')** nach außen vorstehen.

3. Zufuhrketten-Einheit nach einem der vorhergehenden Ansprüche,
**dadurch gekennzeichnet, dass**
die Mitnehmer **(3)** wenigstens jeweils wenigstens teilweise derart lösbar direkt oder indirekt so an der Zufuhrkette **(2)** befestigt sind, dass zum Lösen wenigstens eines Teils jedes Mitnehmers **(3)** von der Zufuhrkette **(2)** weder die Zufuhrkette **(2)** aus der sie aufnehmenden Maschine entnommen noch andere Bauteile von der Maschine demontiert werden müssen.

4. Zufuhrketten-Einheit nach einem der vorhergehenden Ansprüche,
**dadurch gekennzeichnet, dass**
- die Mitnehmer **(3)** aus einem Basisteil **(3**a**)** bestehen, welches fest an der Zufuhrkette **(2)** montiert ist und auch bei einem Formatwechsel daran befestigt bleibt und aus einem Mitnehmer-Teil **(3**b**),** welches am Basisteil **(3a)** befestigbar, insbesondere verrastbar, ist und beim Formatwechsel gewechselt werden kann
und insbesondere
- das Mitnehmer-Teil **(3**b**)** in das Basisteil **(3**a**)** einsteckbar ist, insbesondere in dessen von der Zufuhrkette **(2)** wegweisende freie Stirnfläche, mittels an einem der beiden Teile angeordneten Einsteckzapfen **(6)** und einer entsprechenden Ausnehmung im anderen Teil, zwischen denen eine Rastvorrichtung **(36)** vorhanden ist, insbesondere eine mittels Federkraft vorgespannte Rastkugel.

5. Zufuhrketten-Einheit nach einem der vorhergehenden Ansprüche,
**dadurch gekennzeichnet, dass**
- die Mitnehmer **(3)** an in Längsrichtung **(10** b**)** beanstandeten Aufnahmen der Zufuhrkette **(2)** direkt leicht lösbar befestigt, insbesondere angesteckt und/oder verrastet sind und
- insbesondere die Mitnehmer **(3)** ein Mitnehmer-Teil **(3**b**)** umfassen, welches drehbar, aber nicht lösbar, um eine quer verlaufende Schwenkachse mit einem Basisteil **(3**a**)** verbunden ist und das Basisteil **(3**a**)** direkt lösbar an der Zufuhrkette **(2)** leicht lösbar befestigt ist.

6. Zufuhrketten-Einheit nach einem der vorhergehenden Ansprüche,
**dadurch gekennzeichnet, dass**
die Zufuhrkette **(2)** aus einzelnen, gelenkig miteinander verbundenen, Kettengliedern besteht und die Mitnehmer **(3)** an den als Aufnahmen fungierenden einzelnen Kettengliedern **(37)** direkt leicht lösbar befestigt, insbesondere angesteckt und/oder verrastet sind.

7. Zufuhrketten-Einheit nach einem der vorhergehenden Ansprüche,
**dadurch gekennzeichnet, dass**
- der Mitnehmer **(3)** oder dessen Basis-Teil **(3**a**)** auf der der Zufuhrkette **(2)** zugewandten Seite einerseits Anlageflächen zum Anliegen an der Zufuhrkette **(2)** und andererseits Rastnasen, insbesondere in Querrichtung **(11)** einrastende Quer-Rastnasen **(3.3),** aufweist zum Verrasten an entsprechenden Gegenelementen der Zufuhrkette **(2),** insbesondere einer Gliederkette
und insbesondere
- die Rastnasen, insbesondere Quer-Rastnasen **(3.3),** sich am freien Ende von gegen die Zufuhrkette **(2)** ragenden Rastarmen **(3.11)** befinden.

8. Zufuhrketten-Einheit nach einem der vorhergehenden Ansprüche,
**dadurch gekennzeichnet, dass**
die Kettenwangen **(38)** einer Gliederkette vorzugsweise von der Außenseite her offene Rastöffnungen aufweisen, in die die Rastnasen, insbesondere Quer-Rastnasen **(3.3),** hinein passen und in diesem Rastzustand die Auflageflächen des Mitnehmers **(3)** oder dessen Basisteiles **(3**a**)** an der Zufuhrkette **(2),** insbesondere den Kettenstegen **(39)** einer Gliederkette, aufliegen.

9. Zufuhrketten-Einheit nach einem der vorhergehenden Ansprüche, **dadurch gekennzeichnet, dass**
- entweder der ganze Mitnehmer **(3)** oder
- bei einem mehrteiligen Mitnehmer **(3)**
- entweder dessen Basisteil **(3**a**)** an der Zufuhrkette **(2)**
- oder dessen Mitnehmer-Teil **(3**b**)** an dem Basisteil **(3**a**)**
gelenkig um eine quer zur Laufrichtung **(1**b**)** der Zufuhrkette **(2)** liegende Schwenkachse **(7)** befestigt ist.

10. Zufuhrketten-Einheit nach einem der vorhergehenden Ansprüche,
**dadurch gekennzeichnet, dass**
die Kulissenführung **(40)** so ausgebildet und positioniert ist, dass die Kontaktfläche **(43)** ihren Aufrechtwinkel **(28)** im Wesentlichen beibehält, bis die Oberkante des Mitnehmers **(3)** unter die Oberseite der Auflagefläche **(15)** abgesunken ist.

11. Zufuhrketten-Einheit nach einem der vorhergehenden Ansprüche,
**dadurch gekennzeichnet, dass**
der Mitnehmer **(3)** L-förmig ausgebildet ist mit einem bezüglich der Umlaufebene (**2**') nach außen weisenden Einsteckschenkel **(3**a**2)** und einem dazu, vorzugsweise an dessen unteren Ende, im Winkel und etwa entgegen der Laufrichtung **(10** b**)** der Zufuhrkette **(2)** sich erstreckenden Führungsschenkel **(3**a**1).**

12. Zufuhrketten-Einheit nach einem der vorhergehenden Ansprüche,
**dadurch gekennzeichnet, dass**
die Kulissenführung **(40)** eine Führungskurve **(41)** aufweist, die sich in Anlage an der Unterseite des Führungsschenkels **(3**a**1)** in Laufrichtung **(10**b**)** sowie quer zur Umlaufebene **(2')** erstreckt und an ihrem in Laufrichtung der Zufuhrkette **(2)** weisenden Ende eine konvexe, insbesondere bogenförmige, Biegung in den Innenraum der endlos umlaufenden Zufuhrkette **(2)** hinein vollzieht, so dass insbesondere beim Herumlaufen der Schwenkachse **(7)** um die stromabwärtige Umlenkrolle **(2**a**)** der Führungsschenkel mit seinem nach hinten weisenden freien Ende an der konvexen Biegung der Führungsgruppe **(41)** anliegt.

13. Zufuhrketten-Einheit nach einem der vorhergehenden Ansprüche,
**dadurch gekennzeichnet, dass**
die Auflagefläche **(15)**
- entweder aus zwei zueinander fluchtenden Auflage-Teilen **(15**a, b) besteht, die in Längsrichtung **(10**b**)** vor dem Ende der Förderstrecke **(27)** der Zufuhrkette **(2)** endet und mit einem sich dazwischen in Längsrichtung **(10**b**)** erstreckenden Schlitz **(25),** durch den sich die Mitnehmer **(3)** hindurcherstrecken
- oder die Auflagefläche **(15)** jeweils Bestandteil der Mitnehmer **(3)** ist.

14. Zufuhrketten-Einheit nach einem der vorhergehenden Ansprüche,
**dadurch gekennzeichnet, dass**
- die Auflagefläche für die Produkte **(100)** beidseits der Mitnehmer **(3)** mit der Zufuhrkette **(2)** mitläuft, insbesondere synchron mitläuft, und die Auflage-Teile **(15**a, b) der Auflagefläche in Laufrichtung **(10**b**)** beidseits der Mitnehmer **(3)** aus einzelnen, in Laufrichtung **(10**b**)** aufeinander folgenden, Auflage-Abschnitten **(16)** bestehen, die insbesondere an einer endlos umlaufend Auflage-Kette **(17),** insbesondere einzeln, befestigt sind,
und insbesondere
- die Umlaufebene **(17')** der Auflage-Kette **(17)** in Laufrichtung **(10**b**)** betrachtet in einem Winkel **(18)** und beidseits symmetrisch nach außen abfallend, zur meist vertikal stehenden Umlaufebene **(2')** der Zufuhrkette **(2)** angeordnet ist.

## Claims

1. A feed chain unit (44), comprising:
- a contact surface (15) for products (100) that are to be fed which extends in a longitudinal direction (10b),
- an endless feed chain (2) that runs in the longitudinal direction (10b) and includes drivers (3) attached thereon that are offset from each other with longitudinal offsets (9) for moving products (100) forward along a feed path (27) along the contact surface,
- wherein the one piece or multi piece drivers (3) are respectively at least partially attached directly or indirectly at the feed chain (2) so that they are easily disengagable so that they are at least partially disengagable from the feed chain (2) that is mounted in a machine without disassembling the contact surface (15) and attachable at the feed chain (2) at different longitudinal positions,
**characterized in that**,
- a stationary slotted guide (40) is provided for the drivers (3) so that a forward oriented contact surface (43) of a driver (3) that approaches along an upper main element (2.1) of the feed chain (2) and moves downward in an operating portion of a downstream pulley roller (2a) maintains a prior upward angle (28) relative to the horizontal plane at least over an initial portion of a revolution about the pulley roller (2a) wherein the upright angle (28) is viewed orthogonal to a plane of revolution (2').

2. The feed chain unit according to claim 1,
**characterized in that**,
- the feed chain (2) revolves endlessly in a particularly vertical plane of revolution (2') that is oriented parallel to the longitudinal direction (10b) and revolves about at least two pulley rollers (2a, b), and
- in particular the drivers (3) protrude outward from the feed chain (2) in the plane of revolution (2').

3. The feed chain unit according to one of the preceding claims,
**characterized in that**,
- the drivers (3) are respectively at least partially attached in a disengageable manner directly or indirectly at the feed chain (2) so that neither the feed chain (2) has to be removed from the machine receiving it nor other components have to be dismounted from the machine in order to disengage at least a portion of each driver (3) from the feed chain (2).

4. The feed chain unit according to one of the preceding claims,
**characterized in that**,
- the drivers (3) include a base element (3a) which is fixed at the feed chain (2) and remains attached during a format change and a driver element (3b) which is attachable at the base element (3a), in particular interlockable and which is changeable during the format change,
and in particular
- the driver element (3b) is insertable into the base element (3a), in particular into a free face that is oriented away from the feed chain (2) by an insertion pin (6) that is arranged at one of the two components and a corresponding recess in the other component with an interlocking device (36) arranged between the two components, in particular a spring loaded interlocking ball.

5. The feed chain unit according to one of the preceding claims,
**characterized in that**
- the drivers (3) are directly attached in a disengagable manner at receivers of the feed chain (2) that are offset in the longitudinal direction (10b), in particular plugged in and/or interlocked, and
- in particular the drivers (3) include a driver element (3b) which is rotatable but not disengagable and connected with a base element (3a) so that the driver element (3b) is rotatable about transversally extending pivot axis and the base element (3a) is directly attached at the feed chain (2) in a manner that is easily disengagable.

6. The feed chain unit according to one of the preceding claims,
**characterized in that**,
the feed chain unit (2) is made from individual chain links that are pivotably linked together and the drivers (3) are attached at the individual chain links (37) that function as receivers, wherein the attachment is performed in an easily disengageable manner, in particular through insertion and/or interlocking.

7. The feed chain unit according to one of the preceding claims,
**characterized in that**,
- the driver (3) or its base element (3a) includes contact surfaces on a side that is oriented towards the feed chain (2) which contact surfaces contact the feed chain (2) and interlocking lugs, in particular transversal interlocking lugs (3.3) that interlock in the transversal direction (11) for interlocking at corresponding opposite elements of the feed chain (2), in particular a link chain,
and in particular,
- the interlocking lugs, in particular the transversal interlocking lugs (3.3), are arranged at free ends of interlocking arms (3.11) extending towards the feed chain (2).

8. The feed chain unit according to one of the preceding claims,
**characterized in that**,
the chain links (38) of a link chain advantageously have interlocking openings that are open from an outside, wherein the interlocking lugs, in particular the transversal interlocking lugs (3.3), fit into the interlocking openings and contact surfaces of the driver (3) or its base element (3a) contact the feed chain (2), in particular chain bars (39) of a link chain in the interlocked condition.

9. The feed chain unit according to one of the preceding claims,
**characterized in that**,
- either an entire driver (3) or
- for a multicomponent driver (3)
- either its base element at the feed chain (2),
- or its driver element (3b) at the base element (3a)
is attached pivotable about a pivot axis (7) that is oriented transversal to the running direction (1b) of the feed chain (2).

10. The feed chain unit according to one of the preceding claims,
**characterized in that**,
the slotted guide (40) is positioned so that the contact surface (43) essentially maintains its upright angle (28) until an upper edge of the driver (3) has descended below a topside of the contact surface (15).

11. The feed chain unit according to one of the preceding claims,
**characterized in that**,
the driver (3) is configured L-shaped with an insertion arm (3a2) that is oriented outward with respect to the plane of revolution (2') and a guide arm (3a1) that extends relative to the insertion arm advantageously at a lower end of the insertion arm at an angle and approximately against the running direction (10b) of the feed chain (2).

12. The feed chain unit according to one of the preceding claims,
**characterized in that**,
the slotted guide (40) includes a guide curve (41) that extends in contact with a bottom side of the support arm (3a1) in the running direction (10b) and transversal to the plane of revolution (2') and performs a convex, in particular arcuate, turn into an interior of the endless revolving feed chain (2) at an end that is oriented in a running direction of the feed chain (2), so that the support arm (3a1) in particular when the pivot axis (7) runs about the downstream pulley roller (2a1) follows a convex turn of the guide curve (41) with its backward oriented end.

13. The feed chain unit according to one of the preceding claims,
**characterized in that**,
the contact surface (15)
- is either made from two aligned contact portions (15a, b) which terminate in the longitudinal direction (10b) in front of an end of the feed path (27) of the feed chain (2), and a slot (25) that extends there between in the longitudinal direction (10) through which slot the drivers (3) extend,
or
- the contact surface (15) respectively forms a portion of the drivers (3).

14. The feed chain unit according to one of the preceding claims,
**characterized in that**
- the contact surface for the products (100) runs on both sides of the drivers (3) together with the feed chain (2), in particular synchronically, and the contact portions (15a, b) of the contact surface (15) are made from contact sections (16) that are sequentially arranged in the running direction (10b) on both sides of the drivers (3), wherein the contact sections are in particular attached individually at an endless revolving chain (17),
and in particular
- a plane of revolution (17') of the contact chain (17) is arranged viewed in the running direction (10b) at an angle (18) and on both sides symmetrically downward tapering in an outside direction towards the typically vertically oriented plane of revolution (2') of the feed chain (2).

## Revendications

1. Unité de chaîne d'approvisionnement **(44)** avec
- une surface d'appui **(15)** s'étendant dans un sens longitudinal **(10**b**)** pour les produits à approvisionner **(100),**
- une chaîne d'approvisionnement sans fin **(2)** se déplaçant dans le sens longitudinal **(10**b**)** avec des entraîneurs **(3)** disposés à la chaîne dans des intervalles longitudinaux **(9)** pour avancer les produits **(100)** sur une distance de transport **(27)** le long de la surface d'appui **(15),**
- où les entraîneurs **(3)** en une ou plusieurs pièces sont attachés directement ou indirectement de manière facilement amovible au moins en partie par rapport à la chaîne d'approvisionnement **(2)** de sorte qu'ils peuvent au moins en partie être démontés de la chaîne d'approvisionnement **(2)** montée dans une machine sans démonter la surface d'appui **(15)** et qu'ils peuvent également être attachés à des positions longitudinales différentes à la chaîne d'approvisionnement **(2), caractérisé en ce que**
- un guide de coulisse fixe **(40)** est prévu pour les entraîneurs **(3)** de sorte que lors de la descente de l'entraîneur **(3)** ramené le long d'un brin supérieur **(2.1)** de la chaîne d'approvisionnement **(2)** dans la région d'action d'une poulie de renvoi en aval **(2**a**),** la surface de contact orientée en avant **(43)** de l'entraîneur **(3)** maintient au moins pendant une première partie de son cours autour de ladite poulie de renvoi **(2**a**)** son angle droit **(28)** initial par rapport à la direction horizontale, vu perpendiculaire au plan de circulation **(2').**

2. Unité de chaîne d'approvisionnement selon la revendication 1,
**caractérisé en ce que**
- la chaîne d'approvisionnement **(2)** s'étend sans fin, en particulier dans un plan de circulation vertical **(2')** qui est parallèle au sens longitudinal **(10**b**)** et passe autour d'au moins deux poulies de renvoi **(2**a, b) et
- en particulier les entraîneurs **(3)** projettent de la chaîne d'approvisionnement **(2)** vers l'extérieure dans son plan de circulation **(2').**

3. Unité de chaîne d'approvisionnement selon une des revendications précédentes,
**caractérisé en ce que**
les entraîneurs **(3)** sont attachés directement ou indirectement de manière facilement amovible au moins en partie par rapport à la chaîne d'approvisionnement **(2)** de sorte que pour la libération d'au moins une partie de chaque entraîneur **(3)** de la chaîne d'approvisionnement **(2),** il est ni nécessaire d'enlever la chaîne d'approvisionnement **(2)** de la machine où elle est montée ni de démonter aucun autre composant de la machine.

4. Unité de chaîne d'approvisionnement selon une des revendications précédentes, **caractérisé en ce que**
- les entraîneurs **(3)** comprennent une partie de base **(3**a**)** montée de manière fixe à la chaîne d'approvisionnement **(2)** qui reste fixe également lors d'un changement de format et comprennent une partie d'entraîneur **(3**b**)** qui peut être fixé, en particulier encliqueté, à la partie de base **(3**a**),** et qui peut être échangé lors du changement de format
et en particulier
- la partie d'entraîneur **(3**b**)** peut être introduite dans la partie de base **(3**a**),** en particulier dans sa face frontale libre dirigée dans la direction opposé à la chaîne d'approvisionnement **(2),** au moyen de tenons d'enfichage **(6)** arrangés à une des deux parts et d'une encoche correspondante a l'autre part, avec un dispositif d'arrêt **(36)** entre les deux, en particulier avec une bille d'encliquetage précontrainte par la force d'un ressort.

5. Unité de chaîne d'approvisionnement selon une des revendications précédentes,
**caractérisé en ce que**
- les entraîneurs **(3)** sont attachés directement et facilement amovible a des encoches de la chaîne d'approvisionnement **(2)** espacées dans le sens longitudinal **(10** b), et sont en particulier intercalés et/ou encliquetés, et
- en particulier les entraîneurs **(3)** comprennent une partie d'entraîneur **(3**b**)** qui est liée à une partie de base **(3**a**)** de manière pivotable mais non pas amovible autour d'un axe transversale et **en ce que** la partie de base **(3**a**)** est attachée de manière directement amovible et facilement amovible à la chaîne d'approvisionnement **(2).**

6. Unité de chaîne d'approvisionnement selon une des revendications précédentes,
**caractérisé en ce que**
la chaîne d'approvisionnement **(2)** comprend des membres de chaîne individuels reliés de manière articulée et **en ce que** les entraîneurs **(3)** sont attachée de manière directement et facilement amovible aux membres de chaîne **(37)** fonctionnant comme des encoches et sont en particulier intercalés et/ou encliquetés.

7. Unité de chaîne d'approvisionnement selon une des revendications précédentes,
**caractérisé en ce que**
- l'entraîneur **(3)** ou sa partie de base **(3**a**)** comprend sur son côté face à la chaîne d'approvisionnement **(2)** d'un côté des surfaces d'appui pour un appui à la chaîne d'approvisionnement **(2)** et de l'autre côté des ergots d'encliquetage, en particulier des ergots d'encliquetage transversaux **(3.3)** encliquetant dans un sens transversal **(11),** pour encliqueter à des contre-membres respectifs de la chaîne d'approvisionnement **(2),** en particulier d'une chaîne articulée et en particulier
- les ergots d'encliquetage, en particulier les ergots d'encliquetage transversaux **(3.3),** sont prévus à l'extrémité libre de bras d'encliquetage **(3.11)** orientés vers la chaîne d'approvisionnement **(2).**

8. Unité de chaîne d'approvisionnement selon une des revendications précédentes,
**caractérisé en ce que**
les côtés de chaîne **(38)** d'une chaîne articulée prévoient des ouvertures d'encliquetage, ouvertes de préférence du côté extérieur, qui reçoivent les ergots d'encliquetage, en particulier les ergots d'encliquetage transversaux **(3.3),** et **en ce que** dans cet état d'encliquetage les surfaces d'appui de l'entraîneur **(3)** ou de sa partie de base **(3**a**)** sont en appui à la chaîne d'approvisionnement **(2),** en particulier aux barres de chaîne **(39)** d'une chaîne articulée.

9. Unité de chaîne d'approvisionnement selon une des revendications précédentes, **caractérisé en ce que**
- ou l'entraîneur complet **(3),** ou
- dans le cas d'un entraîneur **(3)** avec plusieurs parties
- sa partie de base **(3**a**)** à la chaîne d'approvisionnement **(2)**
- ou sa partie d'entraîneur **(3**b**)** à la partie de base **(3**a**)**
est attaché autour d'un axe de pivotement **(7)** orienté transversalement au sens de mouvement (**1**b) de la chaîne d'approvisionnement **(2).**

10. Unité de chaîne d'approvisionnement selon une des revendications précédentes, **caractérisé en ce que**
le guide de coulisse **(40)** est adapté et positionné de sorte que la surface d'appui **(43)** maintient essentiellement son angle droit **(28)** jusqu'à ce que le bord supérieur de l'entraîneur **(3)** soit arrivé en dessous de la surface supérieur de la surface d'appui **(15).**

11. Unité de chaîne d'approvisionnement selon une des revendications précédentes, **caractérisé en ce que**
l'entraîneur **(3)** est adapté en forme de L avec un bras d'insertion **(3**a**2)** orienté vers l'extérieur par rapport au plan de circulation **(2')** et un bras de guidage (**3**a**1**) s'étendant de préférence à son extrémité inférieur de manière angulaire et par exemple contre le sens de circulation **(10** b**)** de la chaîne d'approvisionnement **(2).**

12. Unité de chaîne d'approvisionnement selon une des revendications précédentes, **caractérisé en ce que**
le guide de coulisse **(40)** prévoit une courbe de guidage **(41)** s'étendant en appui contre le côté inférieur du bras de guidage **(3**a**1)** dans le sens de circulation **(10**b**)** et transversalement au plan de circulation **(2')** et s'étend à son extrémité dans le sens de circulation de la chaîne d'approvisionnement **(2)** dans une courbe convexe, en particulier en arc, dans l'espace intérieur de la chaîne d'approvisionnement **(2)** sans fin de sorte qu'en particulier pendant le pivotement de l'axe de pivotement **(7)** autour de la poulie de renvoi en aval **(2**a**),** le bras de guidage avec son extrémité libre orienté vers l'arrière arrive en appui contre la courbe convexe du groupe de guidage **(41).**

13. Unité de chaîne d'approvisionnement selon une des revendications précédentes, **caractérisé en ce que**
la surface d'appui **(15)**
- comprend ou deux parties d'appui en alignement **(15**a, b**),** se terminant dans le sens longitudinal **(10**b**)** avant la fin de la distance de transport **(27)** de la chaîne d'approvisionnement **(2)** et avec une fente **(25)** entre celles-ci s'étendant dans le sens longitudinal **(10**b**)** à travers laquelle s'étendent les entraîneurs **(3)**
- ou la surface d'appui **(15)** fait partie des entraîneurs **(3).**

14. Unité de chaîne d'approvisionnement selon une des revendications précédentes, **caractérisé en ce que**
- la surface d'appui, pour les produits **(100)** circule avec la chaîne d'approvisionnement **(2)** sur les deux côtés de l'entraîneur **(3),** en particulier de manière synchrone, et les parties d'appui **(15**a, b) de la surface d'appui comprennent des deux côtés des entraîneurs **(3)** dans le sens de circulation **(10**b**)** des sections d'appui **(16)** successives dans le sens de circulation **(10**b**),** qui sont attachées, en particulier individuellement, en particulier à une chaîne d'appui sans fin **(17),**
et en particulier
- le plan de circulation **(17')** de la chaîne d'appui **(17)** vu dans le sens de circulation **(10**b**)** est arrangé dans un angle **(18)** et s'abaissant symétriquement des deux côtés par rapport au plan de circulation **(2')** généralement vertical de la chaîne d'approvisionnement **(2).**
